# EUROPEAN PATENT SPECIFICATION

(11) **EP 2 255 143 B1**
(45) Date of publication and mention of the grant of the patent: **07.03.2018**
(21) Application number: 09703727.9
(22) Date of filing: 23.01.2009
(51) Int. Cl.: F28D 17/02, F28D 17/04, C03B 5/237

(54) **HEAT EXCHANGER ASSEMBLY FOR PREHEATING COMBURENT AIR FOR A GLASS FURNACE**
WÄRMEAUSTAUSCHVORRICHTUNG ZUR ZUFUHRLUFTVORWÄRMUNG EINES GLASSOFENS
ENSEMBLE ECHANGEUR THERMIQUE POUR PRECHAUFFER DE L'AIR COMBURANT POUR UN FOUR DE VERRERIE

(30) Priority: 24.01.2008 IT TO20080052
(43) Date of publication of application: 01.12.2010
(73) Proprietor: STARA GLASS S.p.A., 16129 Genova (IT)
(72) Inventor: MOLA, Alessandro, I-16129 Genova (IT); SANTERO, Augusto, I-16129 Genova (IT); BRUNO, Giampaolo, I-16129 Genova (IT)
(74) Representative: Lovino, Paolo
(86) International application number: PCT/IB2009/000116
(87) International publication number: WO 2009/093134

(56) References cited:
- EP-A- 0 882 488
- US-A- 3 764 259
- US-A- 4 528 012

## Description

### TECHNICAL FIELD

The present invention concerns a heat exchanger assembly for preheating comburent air for a glass furnace.

### BACKGROUND ART

Continuous glass furnaces are known of that are fed with gaseous fuel or fuel oil, work at temperatures of around 1500-1600 °C and are equipped with heat exchangers for preheating comburent air by means of the heat contained in the flue gas leaving the furnace combustion chamber.

Some furnaces use recuperative heat exchangers made of metal material. The flow of comburent air is continuously piped directly into the furnace combustion chamber and is separated from the flow of flue gas by metal walls that exchange heat between the two flows. The associated furnaces are known as "Unit Melters". Given the technological limits regarding the heat resistance of metal, only the preheating of comburent air at temperatures below 800 °C is possible with these heat exchangers.

To overcome this drawback, regenerative heat exchangers made of a refractory material are used, which comprise a pair of regenerative chambers having respective upper openings that communicate with the furnace. In consequence, the associated furnaces are also called "chamber furnaces". The chambers, made of a refractory material, can be located at the rear, for which the associated furnace is known as an "end-port" or "U-flame" furnace, or at the side, for which the associated furnace is known as a "sideport" furnace.

In a regenerative heat exchanger, the flow of comburent air enters from a heat exchanger inlet, passes through one of the regeneration chambers and finally enters the furnace combustion chamber; the flue gas, instead, leaves the furnace combustion chamber, passes through the other regeneration chamber, where it surrenders thermal energy, and exits from a heat exchanger outlet. A valve system is interposed between the two regeneration chambers, the air inlet and the flue gas outlet, and is controlled so as to swap the comburent airflow and the flue gas flow between the two regeneration chambers with cycles lasting a set time (typically around 20 minutes), so that the thermal energy accumulated in the regeneration chamber where the flue gas flows is transferred to the comburent air that flows through it during the next cycle.

In this type of heat exchanger, the air is preheated to a temperature of 1200-1300°C, while the flue gas leaves the heat exchanger for porting to a chimney at a temperature of approximately 450-600°C.

Beyond maximizing the amount of heat recovered for the comburent air, the need is felt to reduce the temperature of the outgoing flue gas to approximately 200°C, so as to lower losses of thermal energy discharged into the environment via the chimney and in order to be able to filter the flue gas by means of sleeve filter systems, which only operate correctly at temperatures below approximately 250°C, before it is discharged into the environment. However, known regenerative multi-chamber heat exchangers cannot achieve these temperatures.

Furthermore, known multi-chamber heat exchangers are of relatively large height and require significant occupied space below the ground level on which the furnace is built.

In addition, multi-chamber heat exchangers need so-called "washing" between each of the above-described cycles, i.e. it is necessary to wait for the air of the new cycle to evacuate the flue gas of the previous cycle from the regeneration chamber by driving it into the furnace.

Obviously, the flame in the furnace's combustion chamber goes out for the entire duration of "washing". Given the size of the chambers, in known plants the flame is out for approximately 30-40 seconds, which is a relatively long time.

US3764259 discloses an apparatus including a regenerative heat exchanger connected in series with a recuperative heat exchanger between the furnace and a gas cleaning device. US4528012 corresponds to the preamble of claim 1 and discloses a similar apparatus, in which the recuperative heat exchanger is a part of a Brayton cycle, composed of a compressor that is coupled mechanically by a shaft to a turbine. The shaft of the turbine also drives a generator for generating electric power. A portion of the exit air from the turbine is spilled. This spilled air is clean and can be used for space heating.

### DISCLOSURE OF INVENTION

The object of the present invention is to embody a heat exchanger assembly for preheating comburent air for a glass furnace that overcomes the above-specified drawbacks in a simple and economic manner.

According to the present invention, a heat exchanger assembly for preheating comburent air for a glass furnace is embodied, as defined in claim 1.

### BRIEF DESCRIPTION OF THE DRAWINGS

The invention shall now be described with reference to the enclosed drawings, which illustrate a non-limitative embodiment, where:
- Figure 1 is a schematic plan view of a preferred embodiment of the heat exchanger assembly for preheating comburent air for a glass furnace according to the present invention,
- Figure 2 is a section, with parts removed for clarity, made along line II-II of Figure 1,
- Figure 3 is a diagram of a variant of the heat exchanger assembly in Figure 1, and
- Figure 4 is similar to Figure 1 and shows a detail of a further variant of the heat exchanger assembly in Figure 1.

### BEST MODE FOR CARRYING OUT THE INVENTION

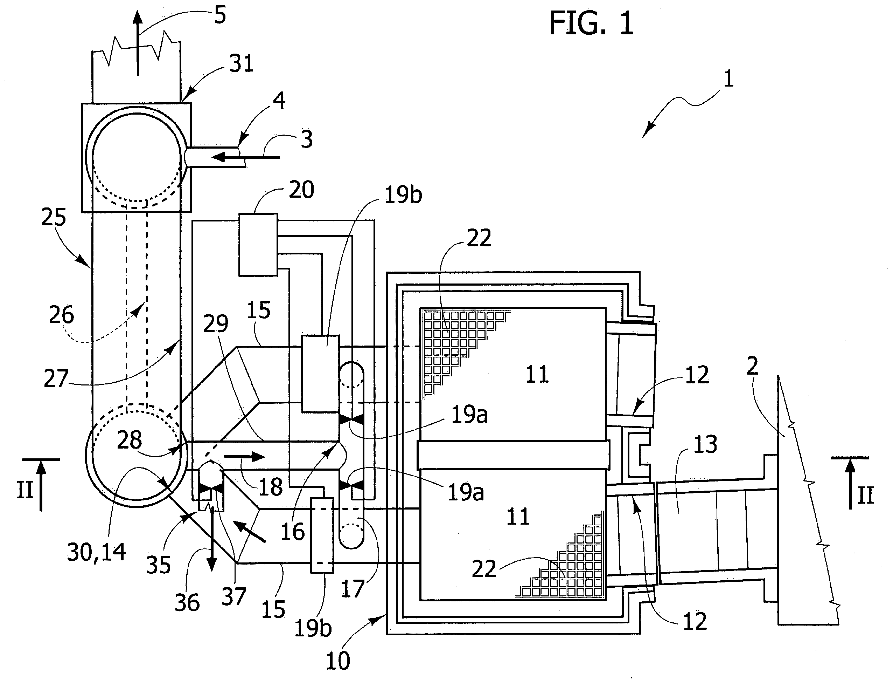

In Figure 1, reference numeral 1 indicates a heat exchanger assembly associated with a glass furnace 2 (partially shown), which is fed using fuel gas or fuel oil in the known manner and not described in detail.

The assembly 1 heats an airflow 3, which enters through an inlet 4 at an ambient temperature of approximately 25°C. The heat for heating the airflow 3 is supplied by a flow of flue gas 5 leaving the melting tank (not shown) of the glass furnace 2.

The assembly 1 comprises a regenerative heat exchanger 10, which in turn comprises:
- two regeneration chambers 11, made of a refractory material, having respective upper openings 12 that are mutually separate and that communicate with the melting tank of the glass furnace 2 vie respective port uptakes in a refractory material, only one of which is shown and indicated by reference numeral 13 in Figure 1,
- an outlet 14, which is connected to the lower part of the chambers 11 via respective separate ducts 15 and selectively communicates with the chambers 11 to discharge the flue gas flow 5,
- an inlet 16, which is connected to both ducts 15 via respective separate pipes 17 and selectively communicates with the chambers 11 for conveying comburent airflow 18, and
- a set of swap valves 19a and 19b (shown schematically), which are respectively positioned on the pipes 17 and on the ducts 15 (in an intermediate position between the outlet 14 and the outlet of the pipes 17 into the ducts 15).

Valves 19a and 19b are automatically controlled by a command and control unit 20 (shown schematically), according to a known strategy and not described in detail, for being switched together in a synchronized manner to swap the comburent airflow 18 and the flue gas flow 5 between the chambers 11 with cycles of set length (twenty minutes for example).

The valves 19b on the ducts 15 comprise respective movable bulkheads or gates, which when in the closed position are in contact with the flue gas on one side and with the heated air on the other, and therefore tend to assume an intermediate temperature between that of the flue gas and that of the heated air. As this intermediate temperature would be too high for the metal material of the bulkheads, they are internally cooled by air, for example, external air taken in at ambient temperature.

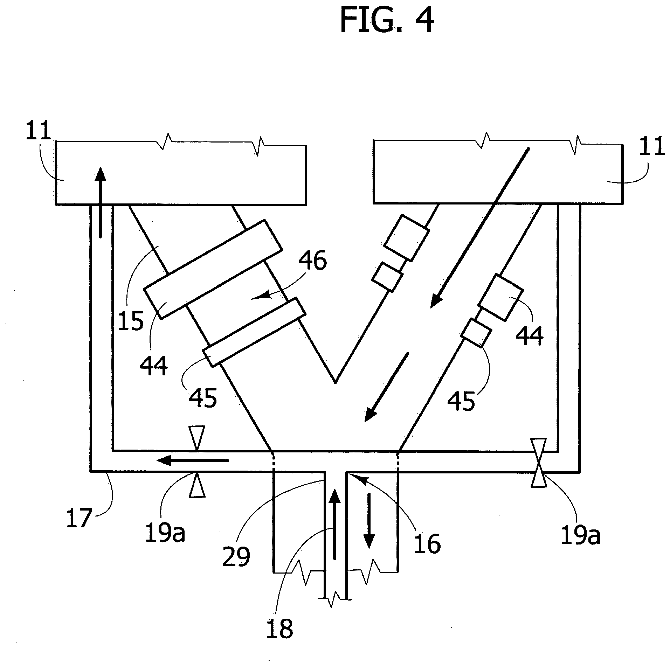

According to a variant shown schematically in Figure 4, each valve 19b is substituted by a pair of valves. The valves 44 and 45 of each pair comprise respective bulkheads or gates, which are jointly movable between the open and closed positions and face each other so as to define an air gap 46 when they are in the closed position. The valves 44 are closer to the chambers 11 and are provided to ensure sealing. Instead, the gates of the valves 45 define respective shields in contact with the flue gas when in the closed position. The air gap 46 defines a "cushion that tends to keep valve 44 at a relatively low temperature and so protect the sealing of the valve 44 in the closed position. Preferably, the air gap 46 receives cooling air (for example air taken from the external environment) due to the effect of the depression naturally present in the air gap 46 when the valves 44 and 45 are closed. In particular, this depression is approximately 120-160 Pa. In this way, the gate of valve 45 is cooled on the opposite side of that exposed to contact with the flue gas, so as to protect metal material of the valve 45 from overheating.

Still with reference to Figure 1, the chambers 11 house respective sheets of heat accumulator elements 22, of known type and not described in detail, which accumulate thermal energy during the cycle in which the corresponding camera 11 is traversed by the flow of flue gas 5 and release the accumulated thermal energy to the comburent airflow 18 that passes through this chamber 11 in the opposite direction during the successive cycle before entering the melting tank.

The assembly 1 also comprises a recuperative heat exchanger 25 made of metal material, operating continuously, that is without flow switching between flue gas and air, and positioned in series, upstream of the heat exchanger 10 when considering the direction of the comburent airflow 18.

The heat exchanger comprises two passages 26 and 27. Passage 27 receives the flue gas flow 5 from an inlet 30 substantially coincident with outlet 14 and conveys the flue gas flow 5 to an outlet 31 that communicates with a chimney (not shown), preferably with a filtering system (not shown) interposed in between, to discharge the flue gas into the environment. Passage 26 receives the airflow 3 from inlet 4 and conveys the airflow 3 to an outlet 28 that communicates with inlet 16 via a pipe 29. Two vertical sections of passage 26 are defined by respective air gaps, which are arranged coaxially around the respective vertical tubes of passage 27, so as to make the air and flue gas run in counterflow and exchange thermal energy between the flue gas and the air through the metal walls that separate the passages 26 and 27.

Preferably, pipe 29 has a branch defined by a pipe 35, thanks to which it is possible to bleed heated air 36 from the airflow 3. The heated air 36 is "clean", i.e. it is conveyed in ducts separate from those for flue gas and can be used for various purposes.

For example, the heated air 36 could be used for the district heating of buildings.

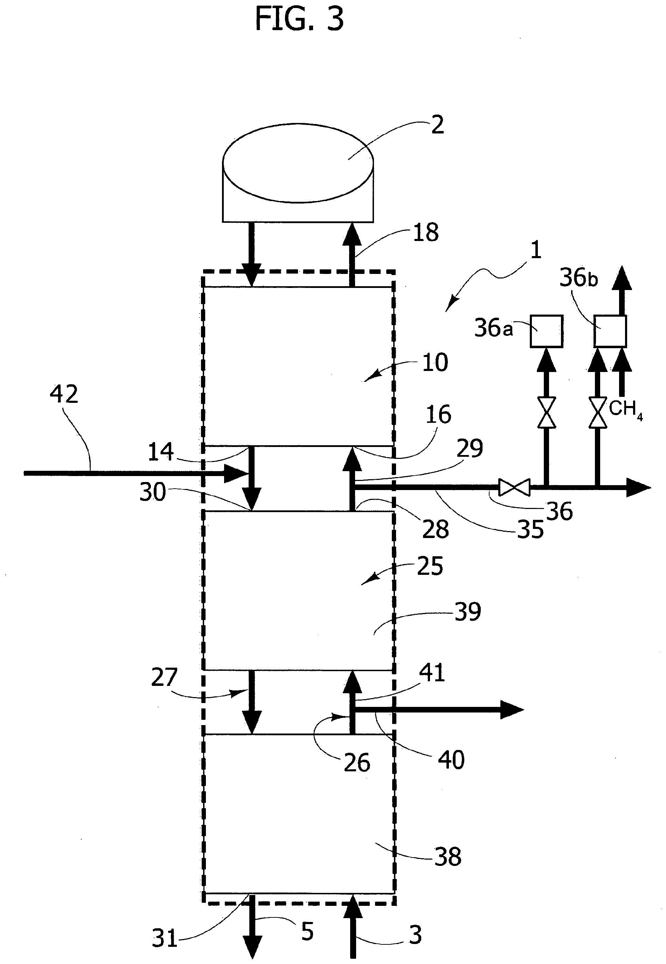

In addition, as schematically shown in the variant in Figure 3, the heated air 36 could be used for preheating the fuel, such as natural gas for example, in a heat exchanger 36a before feeding it to the glass furnace 2, and/or for preheating the material that must be melted in the furnace 2 to make glass in a heat exchanger 36b, (this material consists of raw materials or a mixture of raw materials and glass scrap to be recycled). In known art, the flue gas produced by the furnace 2 is used for these types of preheating: instead, by using the heated air 36, the special expedients that are indispensible for flue gas for sealing and keeping the ducts of the heat exchangers 36a and 36b in depression are not needed and, at the same time, fouling of these ducts is avoided.

The flow of heated air 36 bled off is controlled by a valve 37 (shown schematically) positioned on pipe 35 and controlled by the control unit 20 according to stored parameters and signals provided by sensors (not shown), such that the remaining comburent airflow 18 entering the heat exchanger 10 has the necessary theoretical flow rate for obtaining a given thermal power level and/or a given temperature and/or a given stoichiometrical ratio for the fuel inside the melting tank.

Thanks to the embodiment just described and with the heat accumulator elements and the heat exchange walls of the heat exchangers 10 and 25 designed in an opportune manner, the flue gas has a temperature of approximately 1500°C at the opening 12 through which the flue gas leaves the melting tank, a temperature of approximately 1050°C at outlet 14 (i.e. at inlet 30) and approximately 200°C at outlet 31, while the air has a temperature of approximately 750°C at outlet 28 (i.e. at inlet 16) and approximately 1250°C at the opening 12 through which the air enters the melting tank.

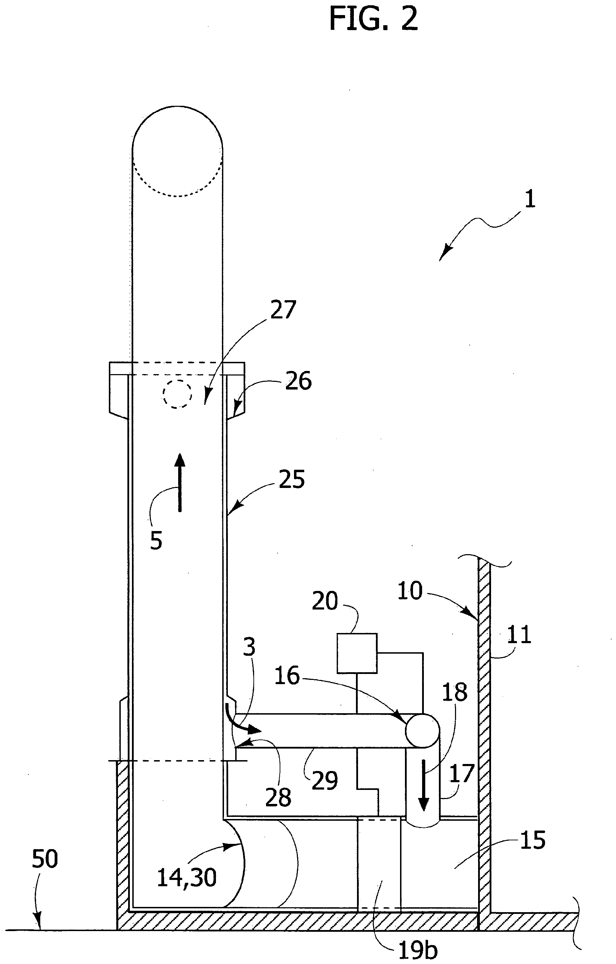

Figure 3 shows a variant in which the constituent parts are only illustrated schematically and, where possible, are indicated by the same reference numerals as used in Figures 1 and 2. This variant basically differs from the embodiment in Figures 1 and 2 in that the heat exchanger 25 is substituted by a recuperative heat exchanger made of metal material comprising two stages 38 and 39 (shown schematically) positioned in series with respect to each other, and in that the assembly 1 comprises a branch 40, in addition to branch 35, for bleeding heated air from a duct 41 (shown schematically) that conveys the airflow 3 from stage 38 to stage 39. In this way, it is possible to bleed hot and "clean" air (i.e. not affected or fouled by any mixing with flue gas) from both branches 35 and 40 at different temperatures, for example, for uses that require heated air at different temperatures.

Preferably, stage 38 is defined by a counterflow heat exchanger, of a type similar to or different from the heat exchanger 25 shown in Figures 1 and 2.

By opportunely designing the heat exchange walls of stages 38 and 39, the flue gas has a temperature of approximately 440°C between stages 38 and 39, while in duct 41 and in branch 40, the air has a temperature of approximately 130°C.

As schematically shown in Figure 3, to reduce flue gas pollution due to nitrogen oxides, a reduction in these oxides could be performed using a technique known by the acronym SNCR (Selective Non-Catalytic Reduction), injecting a flow of ammonia, or a flow of 35-40% urea solution at outlet 14 through a channel 42. As these substances are injected into the flue gas downstream of the heat exchanger 10, the refractory material of the heat exchanger 10 does not suffer damage.

From the foregoing, it is evident how the assembly 1 allows the maximum possible temperature to be achieved for comburent air 18 entering the furnace 2 and obtains outgoing flue gas at a temperature of approximately 200°C. Thus, on one hand, energy losses and hence energy consumption are reduced with respect to heat exchangers that have outgoing flue gas with higher temperatures, while on the other it is possible to filter the outgoing flue gas using sleeve filtering systems. These advantages are achieved by reducing the size of the chambers 11 of the regenerative heat exchanger connected directly to the glass furnace 2 and by inserting an upstream recuperative heat exchanger 25. In other words, part of the regenerative heat exchange used in known art is substituted by a recuperative type of heat exchange using metal material, which is simpler, is less expensive and is more flexible to run in response to changes in operating conditions. Due to the metal material with which it is constructed, the heat exchanger 25 is made to work with air that reaches a maximum temperature of 750-800°C, so as not to compromise the constructional characteristics of the metal material with which the heat exchanger 25 is made.

Thanks to the size reduction of the chambers 11, the heat exchanger 25 can be placed above the ground level 50 (Figure 2) on which the furnace 2 is installed, virtually eliminating the space occupied by the chambers 11 below ground level 50. Always thanks to the size reduction of the chambers 11, the times needed for the so-called "washing" of the chambers 11, during which the flame of the furnace combustion chamber is out, are also reduced. As mentioned above, these times are spent while swapping the flows between the chambers 11 and are tied to the need for "washing" flue gas from the chambers 11 by the passage of air before the chambers 11 are made to run regularly in the next cycle. For example, by halving the volume of the chambers with respect to regenerative heat exchangers of known art, the "washing" and flame out times are also halved, without limiting the heat exchange of the assembly 1, as there is the recuperative heat exchanger 25.

As explained above, the air 36 bled from branch 35 is in excess with respect to the necessary theoretical flow rate for obtaining a given thermal power level and/or a given temperature and/or a given stoichiometrical ratio in the furnace combustion chamber. This excess air removes a greater quantity heat along the heat exchanger 25 with respect to the theoretical flow rate, and so protects the metal of the heat exchange walls from excessive temperatures and allows the heat exchanger 25 to be sized to heat the airflow 3 to a higher temperature with respect to that which could be reached with the theoretical air flow rate. At the same time, branch 35, possibly with branch 40, allow a flow of hot and "clean" air to be obtained in a simple and efficient manner and to always achieve the correct thermal power level required from the furnace 2.

Lastly, from the above, it is evident that modifications and variants can be made to the described assembly 1 without leaving the scope of protection of the present invention, as defined in the enclosed claims.

In particular, the recuperative heat exchanger made of metal material could have different constructional characteristics from those shown by way of example. In addition, the pipes 17 could flow directly into the chambers 11 in parallel with the ducts 15 (as in Figure 4).

## Claims

1. Heat exchanger assembly (1) for preheating comburent air for a glass furnace (2), the assembly comprising:
- a regenerative heat exchanger (10), comprising:
a) two regeneration chambers (11) in a refractory material, having heat accumulator elements and communicating, in use, with a combustion chamber of said glass furnace (2);
b) an air inlet (16) for comburent airflow (18);
c) a flue gas outlet (14) for flue gas flow (5); and
d) swap valve means (19a,19b), that are interposed between said regeneration chambers (11) and said air inlet and flue gas outlet (16,14) and that can be controlled to swap the comburent airflow (18) and the flue gas flow (5) between said regeneration chambers (11) with cycles of set length;
- a recuperative heat exchanger (25) comprising a gas passage (27) and an air passage (26) separated by metal heat-exchange walls; said gas passage (27) communicating at one end with said flue gas outlet (14) to convey said flue gas flow to the opposite end towards a chimney; said air passage (26) communicating with said air inlet (16) to send air heated by said metal walls to said regenerative heat exchanger (10);
- at least one heated air bleeding point (35,40) positioned upstream of said air inlet (16);
**characterised in that** the outlet of said air passage (26) is connected to said air inlet (16) via a pipe (29), and **in that** said heated air bleeding point (35,40) is defined as a branch (35) of said pipe (29) or as a branch (40) along said air passage (26) between two stages (38,39), which are arranged in series and constitute part of said recuperative heat exchanger (25).

2. Assembly according to claim 1, **characterized by** comprising first heat exchanger means (36a) for preheating a material to be melted in the glass furnace (2) by means of heated air from said bleeding point.

3. Assembly according to claim 1 or 2, **characterized by** comprising second heat exchanger means (36b) for preheating a fuel to be fed to the glass furnace (2) by means of heated air from said bleeding point.

4. Assembly according to any of the previous claims, **characterized in that** said swap valve means (19a,19b) comprise two valves (19b), movable between respective open and closed positions, positioned on respective ducts (15) for flue gas and cooled by air at least when in the closed position.

5. Assembly according to any of the previous claims, **characterized in that** said swap valve means comprise two pairs of valves associated with two ducts for flue gas, the valves (44,45) of each pair being movable between an open and a closed position and defining an air gap (46) between each other when they are in the closed position.

6. Assembly according to claim 5, **characterized in that** said air gap (46) is cooled by air.

7. Assembly according to any of the previous claims, **characterized by** comprising a channel (42) at said flue gas outlet (14) for injecting urea or ammonia to reduce nitrogen oxide of the flue gas.

## Patentansprüche

1. Wärmetauscheranordnung (1) zum Vorwärmen von Verbrennungsluft für einen Glasofen (2), wobei die Anordnung aufweist:
einen regenerativen Wärmetauscher (10), der aufweist:
a) zwei Regenerationskammern (11) in einem Feuerfestmaterial, die Wärmespeicherelemente haben und im Gebrauch mit einer Brennkammer des Glasofens (2) kommunizieren;
b) einen Lufteinlass (16) für Verbrennungsluftströmung (18);
c) einen Rauchgasauslass (14) für Rauchgasströmung (5); und
d) Wechselventileinrichtungen (19a, 19b), die zwischen den Regenerationskammern (11) und dem Lufteinlass und Rauchgasauslass (16, 14) angeordnet sind und die so gesteuert werden können, dass die Verbrennungsluftströmung (18) und die Rauchgasströmung (5) zwischen den Regenerationskammern (11) mit Zyklen festgelegter Länge gewechselt werden;
einen rekuperativen Wärmetauscher (25) mit einem Gasdurchgang (27) und einem Luftdurchgang (26), die durch Metall-Wärmetauschwände getrennt sind; wobei der Gasdurchgang (27) an einem Ende mit dem Rauchgasauslass (14) kommuniziert, um die Rauchgasströmung zum entgegengesetzten Ende zu einem Schornstein zu fördern; der Luftdurchgang (26) mit dem Lufteinlass (16) kommuniziert, um durch die Metallwände erwärmte Luft zum regenerativen Wärmetauscher (10) zu senden;
mindestens einen Heißluft-Ablasspunkt (35, 40), der stromaufwärts vom Lufteinlass (16) positioniert ist;
**dadurch gekennzeichnet, dass** der Auslass des Luftdurchgangs (26) mit dem Lufteinlass (16) über ein Rohr (29) verbunden ist, und dadurch, dass der Heißluft-Ablasspunkt (35, 40) als Abzweig (35) des Rohrs (29) oder als Abzweig (40) entlang des Luftdurchgangs (26) zwischen zwei Stufen (38, 39) gebildet ist, die in Reihe angeordnet und Bestandteil des rekuperativen Wärmetauschers (25) sind.

2. Anordnung nach Anspruch 1, **dadurch gekennzeichnet, dass** sie eine erste Wärmetauschereinrichtung (36a) zum Vorwärmen eines im Glasofen (2) zu schmelzenden Materials mit Hilfe von Heißluft vom Ablasspunkt aufweist.

3. Anordnung nach Anspruch 1 oder 2, **dadurch gekennzeichnet, dass** sie eine zweite Wärmetauschereinrichtung (36b) zum Vorwärmen eines dem Glasofen (2) zuzuführenden Brennstoffs mit Hilfe von Heißluft vom Ablasspunkt aufweist.

4. Anordnung nach einem der vorstehenden Ansprüche, **dadurch gekennzeichnet, dass** die Wechselventileinrichtungen (19a, 19b) zwei Ventile (19b) aufweisen, die zwischen jeweiligen offenen und geschlossenen Positionen beweglich, an jeweiligen Rauchgasleitungen (15) positioniert und mindestens in der geschlossenen Position luftgekühlt sind.

5. Anordnung nach einem der vorstehenden Ansprüche, **dadurch gekennzeichnet, dass** die Wechselventileinrichtungen zwei Ventilpaare in Zuordnung zu zwei Rauchgasleitungen aufweisen, wobei die Ventile (44, 45) jedes Paars zwischen einer offenen und einer geschlossenen Position beweglich sind und einen Luftspalt (46) dazwischen bilden, wenn sie sich in der geschlossenen Position befinden.

6. Anordnung nach Anspruch 5, **dadurch gekennzeichnet, dass** der Luftspalt (46) luftgekühlt ist.

7. Anordnung nach einem der vorstehenden Ansprüche, **dadurch gekennzeichnet, dass** sie einen Kanal (42) am Rauchgasauslass (14) zum Einspritzen von Harnstoff oder Ammoniak aufweist, um Stickoxid des Rauchgases zu reduzieren.

## Revendications

1. Ensemble échangeur de chaleur (1) pour préchauffer de l'air comburant pour un four de verrerie (2), l'ensemble comprenant :
- un échangeur de chaleur régénératif (10), comprenant :
a) deux chambres de régénération (11) en un matériau réfractaire, possédant des éléments accumulateurs de chaleur et communiquant, en utilisation, avec une chambre de combustion dudit four de verrerie (2) ;
b) une entrée d'air (16) pour écoulement d'air comburant (18) ;
c) une sortie de gaz de combustion (14) pour écoulement de gaz de combustion (5) ; et
d) des moyens soupapes d'échange (19a, 19b), qui sont interposés entre lesdites chambres de régénération (11) et lesdites entrée d'air et sortie de gaz de combustion (16, 14) et qui peuvent être commandés pour échanger l'écoulement d'air comburant (18) et l'écoulement de gaz de combustion (5) entre lesdites chambres de régénération (11) avec des cycles de longueur réglée ;
- un échangeur de chaleur récupératif (25) comprenant un passage de gaz (27) et un passage d'air (26) séparés par des parois métalliques d'échange de chaleur ; ledit passage de gaz (27) communiquant, à une extrémité, avec ladite sortie de gaz de combustion (14) pour transporter ledit écoulement de gaz de combustion vers l'extrémité opposée vers une cheminée ; ledit passage d'air (26) communiquant avec ladite entrée d'air (16) pour envoyer de l'air chauffé par lesdites parois métalliques audit échangeur de chaleur régénératif (10) ;
- au moins un point de purge d'air chauffé (35, 40) positionné en amont de ladite entrée d'air (16) ;
**caractérisé en ce que** la sortie dudit passage d'air (26) est raccordée à ladite entrée d'air (16) par l'intermédiaire d'un tuyau (29), et **en ce que** ledit point de purge d'air chauffé (35, 40) est défini comme étant une branche (35) dudit tuyau (29) ou comme étant une branche (40) le long dudit passage d'air (26) entre deux étages (38, 39), qui sont agencés en série et constituent une partie dudit échangeur de chaleur récupératif (25).

2. Ensemble selon la revendication 1, **caractérisé en ce qu'**il comprend des premiers moyens échangeurs de chaleur (36a) pour préchauffer un matériau destiné à être fondu dans le four de verrerie (2) au moyen d'air chauffé à partir dudit point de purge.

3. Ensemble selon la revendication 1 ou 2, **caractérisé en ce qu'**il comprend des seconds moyens échangeurs de chaleur (36b) pour préchauffer un combustible destiné à être fourni au four de verrerie (2) au moyen d'air chauffé à partir dudit point de purge.

4. Ensemble selon l'une quelconque des revendications précédentes, **caractérisé en ce que** lesdits moyens soupapes d'échange (19a, 19b) comprennent deux soupapes (19b), mobiles entre des positions respectives ouverte et fermée, positionnées sur des conduites respectives (15) pour gaz de combustion et refroidies par de l'air au moins lorsqu'elles sont dans la position fermée.

5. Ensemble selon l'une quelconque des revendications précédentes, **caractérisé en ce que** lesdits moyens soupapes d'échange comprennent deux paires de soupapes associées à deux conduites pour gaz de combustion, les soupapes (44, 45) de chaque paire étant mobiles entre une position ouverte et une position fermée et définissant un intervalle d'air (46) entre celles-ci lorsqu'elles sont dans la position fermée.

6. Ensemble selon la revendication 5, **caractérisé en ce que** ledit intervalle d'air (46) est refroidi par air.

7. Ensemble selon l'une quelconque des revendications précédentes, **caractérisé en ce qu'**il comprend un canal (42) à ladite sortie de gaz de combustion (14) pour injecter de l'urée ou de l'ammoniac pour réduire l'oxyde d'azote du gaz de combustion.
